# DEMANDE DE BREVET EUROPEEN

(11) **EP 2 515 418 A2**
(43) Date de publication de la demande: **24.10.2012**
(21) Numéro de dépôt: 12002661.2
(22) Date de dépôt: 17.04.2012
(51) Int. Cl.: H02K 5/24, F16F 1/387, F16F 15/08

(54) **Support moteur à moyens de découplage adaptatifs**

(30) Priorité: 19.04.2011 FR 1101216
(71) Demandeur: Valeo Systemes Thermiques, 78320 Le Mesnil Saint Denis (FR)
(72) Inventeur: Elbhar, Thierry, 78610 Les Breviaires (FR); Truillet, Frank, 28410 Bu (FR)

(57) **Abrégé**

L'invention a pour objet un support-moteur (1) comprenant une bague extérieure (10) et un organe de réception (11) d'un moteur électrique (2), l'organe de réception (11) étant relié à la bague extérieure (10) par un moyen de découplage (12). Le moyen de découplage (12) comprend un dispositif adaptatif (15) apte à modifier au moins une caractéristique mécanique du moyen de découplage (12).

L'invention concerne également un système de découplage adaptatif (28) comprenant un tel support-moteur (1).

## Description

La présente invention concerne un support-moteur, en particulier un support de moteur électrique, notamment pour des installations de ventilation, ou des installations de chauffage, ventilation et/ou climatisation pour véhicule automobile. Plus particulièrement, l'invention porte sur un support-moteur équipé de moyens adaptatifs pour amortir les vibrations émises ou transmises.

Dans une installation de chauffage, ventilation et/ou climatisation pour véhicule automobile, le flux d'air circulant est propulsé par un groupe moto-ventilateur comportant notamment une roue de pulseur et un moteur électrique apte à mettre en rotation la roue de pulseur. Le groupe moto-ventilateur comporte également un support-moteur, solidarisé sur un boîtier de l'installation de chauffage, ventilation et/ou climatisation, dont une cavité est apte à recevoir le moteur du groupe moto-ventilateur.

Le support-moteur est classiquement constitué d'une bague extérieure et d'un organe de réception du moteur électrique. Pour éviter la transmission des vibrations internes causées par le moteur, l'organe de réception est relié à la bague extérieure par des moyens de découplage, agissant comme un amortisseur de vibrations internes. Pour atteindre un bon niveau de découplage, il est nécessaire de concevoir les moyens de découplage de manière relativement souple.

Cependant, le boîtier de l'installation de chauffage, ventilation et/ou climatisation, auquel est relié le support-moteur, subit également des vibrations causées par les mouvements du véhicule. Dans ces circonstances, de fortes sollicitations et contraintes externes sont transmises au moteur électrique monté dans le support-moteur, au travers du boîtier de l'installation de chauffage, ventilation et/ou climatisation. Ces vibrations externes peuvent entraîner une détérioration de composants de l'installation de chauffage, ventilation et/ou climatisation, notamment la roue de pulseur. Il est nécessaire de concevoir les moyens de découplage de manière relativement ferme. Une telle augmentation de la rigidité des moyens de découplage pour éviter la transmission des sollicitations et contraintes externes dégrade l'amortissement des vibrations internes émises par le moteur électrique.

De plus, les moyens de découplage doivent également permettre un bon amortissement de vibrations internes dans diverses plages de fréquences du fait des divers modes et/ou différentes vitesses de fonctionnement du moteur du groupe moto-ventilateur. Or, une rigidité spécifique doit être définie pour absorber les vibrations internes apparaissant dans une plage de fréquences donnée.

Le but de la présente invention est donc de résoudre les inconvénients décrits précédemment, principalement en agissant sur les moyens de découplage pour lui conférer une raideur définie, dans certaines conditions, par exemple lorsque le véhicule est soumis à des sollicitations et contraintes externes au support-moteur, tout en lui conférant une souplesse efficace pour éviter la propagation de vibrations internes au support-moteur, notamment dans diverses plages de fréquences.

L'invention a donc pour objet un support-moteur comprenant une bague extérieure et un organe de réception d'un moteur électrique. L'organe de réception est relié à la bague extérieure par des moyens de découplage. Plus particulièrement, les moyens de découplage comprennent un dispositif adaptatif apte à modifier au moins une caractéristique mécanique des moyens de découplage.

On comprend ici que les moyens de découplage sont installés dans un espace situé entre la bague extérieure et l'organe de réception, la bague extérieure et l'organe de réception n'étant pas en contact direct l'un contre l'autre. Seul les moyens de découplage assurent la liaison entre la bague extérieure et l'organe de réception.

Selon la présente invention, la caractéristique mécanique modifiée par le dispositif adaptatif est une raideur ou une dimension des moyens de découplage.

La raideur des moyens de découplage détermine les propriétés d'amortissement des moyens de découplage. La dimension définit la géométrie des moyens de découplage. La modification de la dimension agit également sur les propriétés d'amortissement des moyens de découplage.

En particulier, le dispositif adaptatif modifie la caractéristique mécanique par passage d'un courant électrique au travers des moyens de découplage ou par application d'une force sur les moyens de découplage.

Avantageusement, la force appliquée sur les moyens de découplage est extérieure et distincte des moyens de découplage.

Selon encore une caractéristique de la présente invention, le dispositif adaptatif est un élément chauffant en contact avec les moyens de découplage, préférentiellement intégré dans les moyens de découplage.

Selon encore une autre caractéristique de l'invention, le matériau constitutif des moyens de découplage présentent des propriétés électriques.

Alternativement ou en complément, le dispositif adaptatif est un actionneur extérieur aux moyens de découplage agissant sur au moins une face des moyens de découplage.

L'invention couvre également un système de découplage adaptatif comprenant un support-moteur tel que décrit ci-dessus. Le système de découplage adaptatif comprend en outre un module de commande agissant sur le dispositif adaptatif du support-moteur.

A cet effet, le module de commande recevant au moins un premier signal d'entrée représentatif en tout ou partie d'une vibration interne au support-moteur. On comprend ici que le premier signal d'entrée est, en tout ou partie, représentatif d'une vibration parcourant l'organe de réception du moteur électrique, c'est-à-dire une vibration créée par le moteur électrique ou par la roue de pulseur.

Avantageusement, le module de commande reçoit un deuxième signal d'entrée représentatif d'une vibration extérieure au support-moteur. On comprend ici que le deuxième signal d'entrée est l'image d'une vibration parcourant la bague extérieure, par exemple une vibration du véhicule consécutive au roulage du véhicule.

Avantageusement encore, le module de commande reçoit un troisième signal d'entrée représentatif d'une température d'air. L'air en question peut être le flux d'air mis en mouvement par le groupe moto-ventilateur et peut par exemple être mesurée au moyen d'un capteur installé dans la volute. La température peut également être celle de l'air à l'intérieur d'une cabine du véhicule, ou encore l'air extérieur à la cabine du véhicule.

L'invention couvre encore un groupe moto-ventilateur comprenant une roue de pulseur et un moteur électrique monté dans un support-moteur tel que décrit ci-dessus, et une installation de chauffage, ventilation et/ou climatisation pour véhicule, par exemple automobile, comprenant le groupe moto-ventilateur décrit précédemment.

Un tout premier avantage selon l'invention réside dans la possibilité de disposer d'un support-moteur capable d'amortir les différents types de vibrations subis par ou émis par le support-moteur.

Un autre avantage réside dans la possibilité de piloter les moyens de découplage équipant le support-moteur en fonction, d'une part, de paramètres internes au support-moteur, et d'autre part, de paramètres externes au support-moteur.

Un autre avantage de l'invention réside dans l'adaptation en temps réel des propriétés d'amortissement du support-moteur. En effet, les moyens de découplage réagissent immédiatement à toutes sollicitations du dispositif adaptatif.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 est une vue en perspective éclatée d'un groupe moto-ventilateur comprenant un support-moteur selon la présente invention,
- la figure 2 est une vue en perspective du support-moteur selon la présente invention,
- la figure 3 est une vue schématique d'une première variante de réalisation du support-moteur et d'un module de commande selon la présente invention,
- la figure 4 est une vue schématique d'une deuxième variante de réalisation du support-moteur selon la présente invention, et
- la figure 5 est un graphique comparatif du support-moteur selon la présente invention et d'un support-moteur selon l'art antérieur.

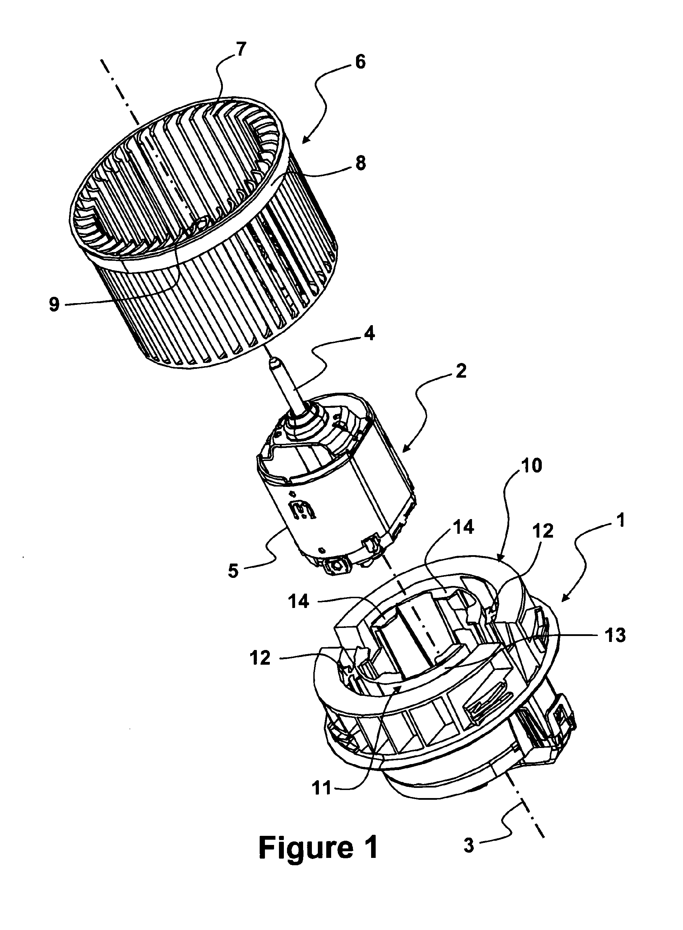

La figure 1 est une vue en perspective éclatée d'un groupe moto-ventilateur comprenant un support-moteur 1. Elle montre, plus particulièrement, le contexte d'utilisation du support-moteur 1 selon l'invention. La figure 1 présente donc un groupe moto-ventilateur destiné à être monté sur un boîtier d'une installation de chauffage, ventilation et/ou climatisation équipant un véhicule automobile. Ce groupe moto-ventilateur assure la mise en mouvement d'un flux d'air à l'intérieur du boîtier de l'installation de chauffage, ventilation et/ou climatisation.

Le groupe moto-ventilateur est constitué du support-moteur 1 à l'intérieur duquel est monté un moteur électrique 2. Le moteur électrique 2 comprend un axe longitudinal 3 passant en son centre et définissant l'axe principal du moteur électrique 2. Le moteur électrique 2 comprend également un arbre 4 s'étendant le selon l'axe longitudinal 3. L'arbre 4 est supporté par le moteur électrique 2 à chacune de ses extrémités, par exemple par des paliers ou des roulements. L'arbre 4 débouche d'une carcasse 5 faisant partie intégrante du moteur électrique 2 pour former une extrémité libre.

L'extrémité libre de l'arbre 4 reçoit une roue de pulseur 6, avantageusement en matière plastique. Selon un exemple particulier de réalisation, la roue de pulseur 6 prend la forme d'un bol, par exemple fermé ou partiellement ajouré, à la périphérie duquel s'étend une multiplicité de pales 7. Les pales 7 sont reliées, d'un part, vers l'intérieur de la roue de pulseur 6, au bol et, d'autre part, à l'extérieur de la roue de pulseur 6, à un bord circulaire 8 joignant chacune des pales 7.

Selon un exemple préférentiel de réalisation de la présente invention, les pales 7 s'étendent selon une direction parallèle à la direction de l'axe longitudinal 3 du moteur électrique 2.

La roue de pulseur 6 prend donc la forme d'une hélice équipée de pales axiales mais il pourrait aussi s'agir d'une hélice à pales radiales, par exemple plate, où les pales s'étendent sensiblement perpendiculairement à la direction de l'axe longitudinal 3 du moteur électrique 2.

La roue de pulseur 6 est solidarisée sur l'arbre 4 par un moyeu 9 disposé au centre du bol et au travers duquel passe l'extrémité libre de l'arbre 4 du moteur électrique 2.

Le moteur électrique 2 est maintenu dans le support-moteur 1. A cet effet, le support-moteur 1 comprend une bague extérieure 10, un organe de réception 11 du moteur électrique 2 et au moins un moyen de découplage 12 interposé entre la bague extérieure 10 et l'organe de réception 11.

L'organe de réception 11 prend notamment la forme d'une bague intérieure 13, par exemple constituée d'une portion cylindrique, à l'extrémité de laquelle est installé au moins un ergot de blocage 14 du moteur électrique 2. L'ergot de blocage 14 empêche ainsi tout mouvement du moteur électrique 2 dans la direction de l'axe longitudinal 3.

Selon l'invention, le moyen de découplage 12 comprend un dispositif adaptatif 15 apte à modifier au moins une caractéristique mécanique du moyen de découplage 12. Le dispositif adaptatif 15 agit sur le moyen de découplage 12 de sorte à modifier ou adapter les propriétés d'amortissement du moyen de découplage 12. Ces propriétés d'amortissement sont ainsi adaptées afin d'éviter la création de vibrations, de nuisances sonores, telles que des harmoniques, ou des bruits liés au balourd de l'ensemble constitué du moteur électrique 2 et de la roue de pulseur 6.

La modification ou l'adaptation engendrée sur le moyen de découplage 12 par le dispositif adaptatif 15 est d'ordre mécanique. Par exemple, selon un mode de réalisation, il peut s'agir d'une modification de la raideur du moyen de découplage 12. Ainsi, le moyen de découplage 12 est susceptible de prendre au moins deux duretés shore différentes sous l'action du dispositif adaptatif 15. L'action du dispositif adaptatif 15 peut être d'origine électrique ou mécanique.

Par ailleurs, selon un autre mode de réalisation alternatif ou complémentaire, la modification ou l'adaptation engendrée sur le moyen de découplage 12 par le dispositif adaptatif 15 peut être relative à la forme du moyen de découplage 12. Cela se traduit par une adaptation des propriétés d'amortissement du moyen de découplage. Par exemple, un organe d'appui, par exemple un actionneur, vient en contact sur une partie périphérique du moyen de découplage 12, venant ainsi modifier au moins une dimension du moyen de découplage. Le dispositif adaptatif 15 est donc apte à changer ainsi la forme générale du moyen de découplage 12.

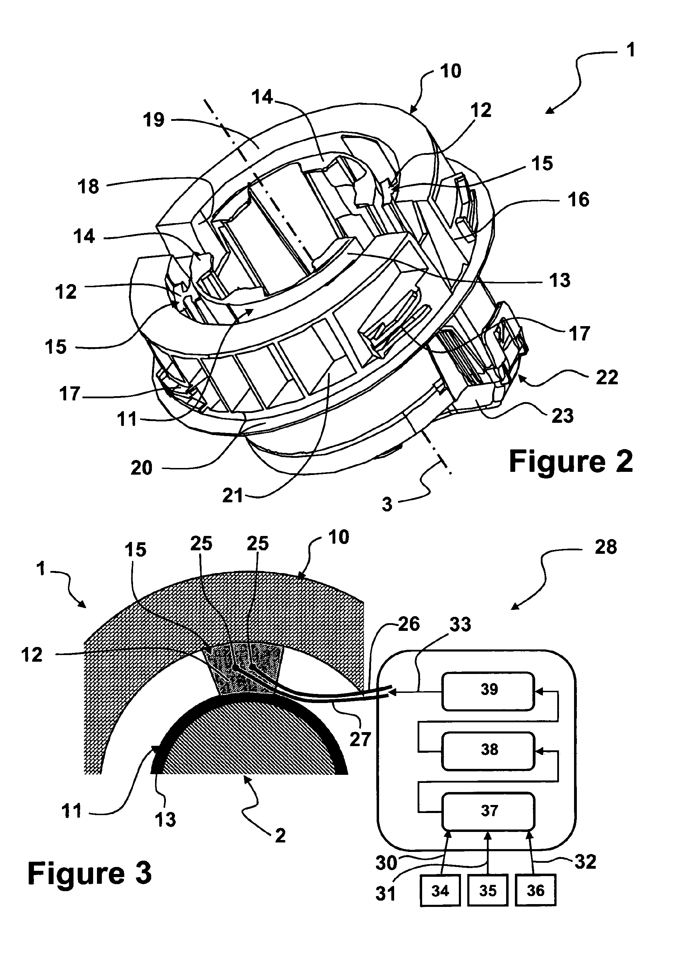

On se réfère dorénavant à la figure 2 qui est une vue en perspective du support-moteur 1 selon la présente invention.

Avantageusement, le support-moteur 1 est en matière plastique, par exemple du polypropylène. Il présente une forme générale cylindrique, allongée et creuse. Autrement dit, le support-moteur 1 présente un évidement central pour recevoir le moteur électrique 2. L'évidement central permet de recevoir l'organe de réception 11 du moteur électrique 2. Plus particulièrement, l'évidement central constitue un logement pour la bague intérieure 13.

Selon l'exemple de réalisation présenté à la figure 2, la bague intérieure 13 comporte une pluralité d'ergots de blocage 14, au nombre de quatre, agencés à chaque extrémité de la bague intérieure 13. Les ergots de blocage 14 forment une butée pour le moteur électrique 2. Les ergots de blocage14 prennent naissance sur la bague intérieure 13 et s'étendent radialement vers l'axe longitudinal 3 dans un plan perpendiculaire à l'axe longitudinal 3.

La bague extérieure 10 est constituée d'une paroi périphérique extérieure 16. La paroi périphérique extérieure 16 entoure l'organe de réception 11, en particulier la bague intérieure 13. La paroi périphérique extérieure 16 comprend une pluralité de moyens de solidarisation 17 destinés à assurer la fixation du support-moteur 1 sur le boîtier de l'installation de chauffage, ventilation et/ou climatisation.

Préférentiellement, le support-moteur 1 est monté sur le boîtier de l'installation de chauffage, ventilation et/ou climatisation au niveau d'une volute agencée dans le boîtier de l'installation de chauffage, ventilation et/ou climatisation assurant la canalisation du flux d'air généré par le groupe moto-ventilateur.

Favorablement, les moyens de solidarisation 17 comprennent notamment deux nervures s'étendant sur la paroi périphérique extérieure 16 selon une direction circonférentielle, formant ainsi entre elles une rainure de réception d'un doigt agencé sur le boîtier de l'installation de chauffage, ventilation et/ou climatisation.

Décalé radialement en direction de l'axe longitudinal 3, le support-moteur 1 comporte une paroi intermédiaire 18 reliée à la paroi périphérique extérieure 16 par un flanc 19. Le flanc 19 joint la paroi périphérique extérieure 16 avec la paroi intermédiaire 18. Préférentiellement, le flanc 19 s'étend dans un plan perpendiculaire à l'axe longitudinal 3.

Selon l'exemple de réalisation, la paroi périphérique extérieure 16, la paroi intermédiaire 18 et la bague interne 13 prennent la forme de tubes cylindriques creux agencés de manière globalement concentrique les uns par rapport aux autres, centrés sur l'axe longitudinal 3.

Selon l'exemple présenté aux figures 1 et 2, le support-moteur 1 comporte trois moyens de découplage 12. Ainsi, la paroi intermédiaire 18 est reliée à la bague intérieure 13 par les trois moyens de découplage 12.

Préférentiellement, les trois moyens de découplage 12 sont identiques et, avantageusement, uniformément répartis selon des secteurs angulaires égaux à 120°.

Le moyen de découplage 12 est fabriqué dans un matériau plus souple que le matériau utilisé pour le support-moteur 1 afin d'assurer une fonction d'isolation entre la bague intérieure 13 et la paroi intermédiaire 18 et ainsi empêcher la transmission des vibrations internes générées par le moteur électrique 2 et/ou le balourd de l'ensemble constitué du moteur électrique 2 et de la roue de pulseur 6. Favorablement, le matériau du moyen de découplage 12 est, par exemple, un élastomère, notamment de l'EPDM ou du SEBS ou un caoutchouc.

Le moyen de découplage 12 présente une section transversale, selon un plan perpendiculaire à l'axe longitudinal 3, en « H », particulièrement visible sur les figures 1 et 2. La section en « H » constitue un exemple particulier et non limitatif de réalisation du moyen de découplage 12. Par ailleurs, les caractéristiques et dimensions du moyen de découplage 12 peuvent être de géométries quelconques.

De façon complémentaire et/ou alternatif, le moyen de découplage 21 se présente sous la forme d'un plot parallélépipédique comprenant un premier côté en contact direct avec la bague intérieure 13 du support-moteur 1. La coopération du moyen de découplage 21 avec la bague intérieure 13 peut se faire, par exemple, par collage, clippage, surmoulage ou coopération de forme. Le moyen de découplage 12 comprend également un deuxième côté en contact direct avec la bague intermédiaire 18 du support-moteur 1. La coopération du moyen de découplage 21 avec la bague intermédiaire 18 peut se faire, par exemple, par collage, clippage, surmoulage ou coopération de forme. Le moyen de découplage 12 comprend enfin des côtés latéraux s'étendant parallèlement à l'axe longitudinal 3 du moteur électrique 2. Selon l'exemple préférentiel présenté, les côtés latéraux présente respectivement au moins un évidement s'étendant selon une direction parallèle à l'axe longitudinal 3. L'évidement des côtés latéraux contribue à définir la section en « H » du moyen de découplage 12.

La structure spécifique du moyen de découplage 12 assure l'isolation vibratoire entre le moteur électrique 2 et le boîtier de l'installation de chauffage, ventilation et/ou climatisation recevant le support-moteur 1 de tous types de vibrations provoquées par la mise en oeuvre du moteur électrique 2 et de la roue de pulseur 6. Ainsi, les contraintes axiales et tangentielles sont absorbées par le moyen de découplage 12. De plus, l'évidement agencé sur le côté latéral du moyen de découplage 12 selon une direction parallèle à l'axe longitudinal 3 confère une souplesse au moyen de découplage 12 par rapport à une contrainte axiale et par rapport à une contrainte tangentielle tout en conservant une rigidité du plot par rapport à une contrainte radiale.

La paroi périphérique extérieure 16 présente un bord d'accostage 20. Le bord d'accostage 20 prend la forme d'une collerette périphérique venant en contact avec un bord du boîtier de l'installation de chauffage, ventilation et/ou climatisation. Selon un exemple de réalisation, la collerette périphérique peut être présenter un profil plan, en particulier un plan perpendiculaire à l'axe longitudinal 3. Alternativement, la collerette périphérique peut présenter un profil évolutif, notamment selon une évolution axiale, en particulier un profil hélicoïdal.

Le bord d'accostage 20 assure le montage, avantageusement étanche à l'air, entre le support-moteur 1 et le boîtier de l'installation de chauffage, ventilation et/ou climatisation.

Entre le flanc 19 et le bord d'accostage 20, est disposé une pluralité de renforts 21 ayant la fonction d'assurer la tenue mécanique de la bague extérieure 10.

Le support-moteur 1 comprend également un dispositif de refroidissement 22 du moteur électrique 2. Le dispositif de refroidissement 22 comprend un canal 23 formé sur la périphérie de la paroi intermédiaire 18. Le dispositif de refroidissement 22 assure une canalisation d'une partie du flux d'air, mis en mouvement par le groupe moto-ventilateur, par l'intermédiaire du canal 23 vers le moteur électrique 3.

La figure 3 est une vue schématique d'une première variante de réalisation du support-moteur 1 et d'un module de commande 29 selon la présente invention. En particulier, la figure 3 montre la première variante de réalisation du dispositif adaptatif 15 dans laquelle la bague extérieure 10, le moyen de découplage 12, la bague intérieure 13 et le moteur électrique 2 sont ici représentés de manière schématique.

Le dispositif adaptatif 15 est intégré dans le matériau constituant le moyen de découplage 12. Par exemple, le dispositif adaptatif 15 est moulé à l'intérieur du plot formant le moyen de découplage 12. Selon cet exemple de réalisation, la caractéristique mécanique modifiée par le dispositif adaptatif 15 est la raideur du moyen de découplage 12.

Avantageusement, la modification ou l'adaptation du moyen de découplage 12 est réalisée par changement de la température du matériau constitutif du moyen de découplage 12. Pour ce faire, le dispositif adaptatif 15 comprend un élément chauffant 25 cheminant à l'intérieur du moyen de découplage 12. L'élément chauffant 25 débouche du moyen de découplage 12 par deux terminaux reliés respectivement à des conducteurs électriques 26 et 27.

L'élément chauffant 25 est ainsi une source de chaleur permettant de modifier la température du moyen de découplage 12 et, corrélativement, d'adapter la raideur du moyen de découplage 12.

L'élément chauffant 12 peut être, par exemple, un élément chauffant résistif. Il peut également s'agir d'un élément chauffant à effet CTP (Coefficient de Température Positif).

Selon une variante de réalisation de la présente invention, le dispositif adaptatif 15 est constitué par le matériau du moyen de découplage 12 en tant que tel. Dans une telle situation, le matériau, par exemple plastique, présente des propriétés électriques. A titre d'exemple, le matériau du moyen de découplage 12 peut être un élément piézo-électrique, tel qu'un polymère ou un élastomère. Ainsi, la caractéristique mécanique du moyen de découplage 12 est modifiée quand ce dernier est traversé par un courant électrique, le matériau du moyen de découplage 12 étant conducteur d'électricité.

Selon une autre variante de réalisation de la présente invention, la caractéristique mécanique du moyen de découplage 12 modifiée par le dispositif adaptatif 15 est sa forme. En effet, le matériau du moyen de découplage 12 présentant des propriétés électriques, il est susceptible de générer des contraintes mécaniques à l'intérieur du moyen de découplage 12 tendant, par exemple, à étirer ou contracter le moyen de découplage 12. Ainsi, il est procédé à une modification de la forme du moyen de découplage 12

L'emploi d'un matériau présentant des propriétés électriques peut également générer une modification de la raideur du moyen de découplage 12, permettant ainsi d'adapter les propriétés d'amortissement ou anti-vibratoire du moyen de découplage 12.

La figure 3 illustre également un système de découplage adaptatif 28 comprenant, d'un part, le support-moteur 1 et, d'autre part, un module de commande 29 du dispositif adaptatif 15 du moyen de découplage 12 du support-moteur 1.

Le module de commande 29 reçoit divers signaux d'entrée 30, 31 et 32 et délivre un signal de commande 33 vers les conducteurs électriques 26 et 27.

Les signaux d'entrée 30, 31 et 32 correspondent à des informations pouvant être mesurées, par exemple par un capteur, ou évaluées à partir de paramètres de l'installation de chauffage, ventilation et/ou climatisation ou encore prélevées, par exemple sur le réseau électrique du véhicule quand ces informations sont disponibles.

Le module de commande 29 est, par exemple, un calculateur électronique autonome ou, éventuellement, intégré dans un autre contrôleur existant sur le véhicule, par exemple un boîtier électronique de contrôle de l'installation de chauffage, ventilation et/ou climatisation.

A titre d'exemple non limitatif, le module de commande 29 prend en compte au moins un premier signal d'entrée 30 représentatif de la vibration interne au support-moteur 1, c'est-à-dire provenant du moteur électrique 2 ou de la roue de pulseur 6. La vibration interne au support-moteur 1 est détectable notamment sur l'organe de réception 11 du moteur électrique 2. Le premier signal d'entrée 30 peut provenir, par exemple, d'un capteur optoélectronique 34 destiné à mesurer la vitesse de rotation de l'arbre du moteur électrique 2, ce qui permet d'en déduire le niveau potentiel de vibrations.

Toutefois, la présente invention prévoit aussi une solution pour déterminer le premier signal d'entrée 30 sans ajout d'un composant supplémentaire, tel que le capteur optoélectronique 34. Selon cette alternative de réalisation, le module de commande 29 reçoit alors une pluralité de premiers signaux d'entrée 30 parmi lesquels on trouve :
- une information de la tension d'alimentation du moteur électrique,
- une information d'intensité consommée par le moteur électrique,
- une information relative à une différence de pression entre l'amont et l'aval du groupe moto-ventilateur, ...

Notamment, la différence de pression entre l'amont et l'aval du groupe moto-ventilateur représente un écart entre la pression à l'extérieur du boîtier de l'installation de chauffage, ventilation et/ou climatisation et la pression à l'intérieur du boîtier de l'installation de chauffage, ventilation et/ou climatisation après la roue de pulseur 6 selon le sens de déplacement du flux d'air.

Néanmoins, l'information relative à une différence de pression entre l'amont et l'aval du groupe moto-ventilateur peut être estimée à partir :
- du mode de fonctionnement de l'installation de chauffage, ventilation et/ou climatisation (position d'un volet d'entrée d'air, position de volets de distribution, ...)
- de la vitesse du véhicule,
- de la position des fenêtres (ouvertes, fermées, ...) ...

Dans le cas de moteur électrique 2 sans balai, le premier signal d'entrée 30, image de la vitesse de rotation du moteur électrique 2, est récupéré sur le signal de pilotage du moteur électrique 2.

Le module de commande 29 prend également en compte un deuxième signal d'entrée 31 représentatif d'une vibration externe au support-moteur 1, et notamment détectable sur la bague extérieure 10.

Le deuxième signal d'entrée 31 peut, par exemple, provenir d'au moins un accéléromètre 35, par exemple positionné sur la structure du véhicule, ou avantageusement sur le boîtier de l'installation de chauffage, ventilation et/ou climatisation. Le positionnement de l'accéléromètre 35 sur le boîtier de l'installation de chauffage, ventilation et/ou climatisation permet une lecture du niveau de vibrations externes au plus près du support-moteur 1.

Alternativement, le deuxième signal d'entrée 31 peut être prélevé sur un accéléromètre existant sur le véhicule, comme par exemple un accéléromètre utilisé pour le déclenchement des systèmes de sécurité active montés sur le véhicule.

Le module de commande 29 prend en compte également un troisième signal d'entrée 32 représentatif d'une température d'air intérieur et/ou extérieur à la cabine du véhicule. Il peut également s'agir de l'air à l'intérieur de l'installation de chauffage, ventilation et/ou climatisation.

Plus particulièrement, il est avantageux de mesurer la température de l'air environnant le moyen de découplage 12. La température de l'air peut ainsi être mesurée par un moins un capteur de température 36 installé dans la cabine et/ou à l'extérieur de celle-ci et/ou à l'intérieur de la volute.

Le module de commande 29 est un calculateur, ou un circuit électronique, comprenant un module d'acquisition de données 37 apte à délivrer un signal de traitement à un module de calcul 38 apte à délivrer un signal de calcul à un module de transformation 39 à apte à générer le signal électrique 33 destiné au dispositif adaptatif 15 du moyen de découplage 12.

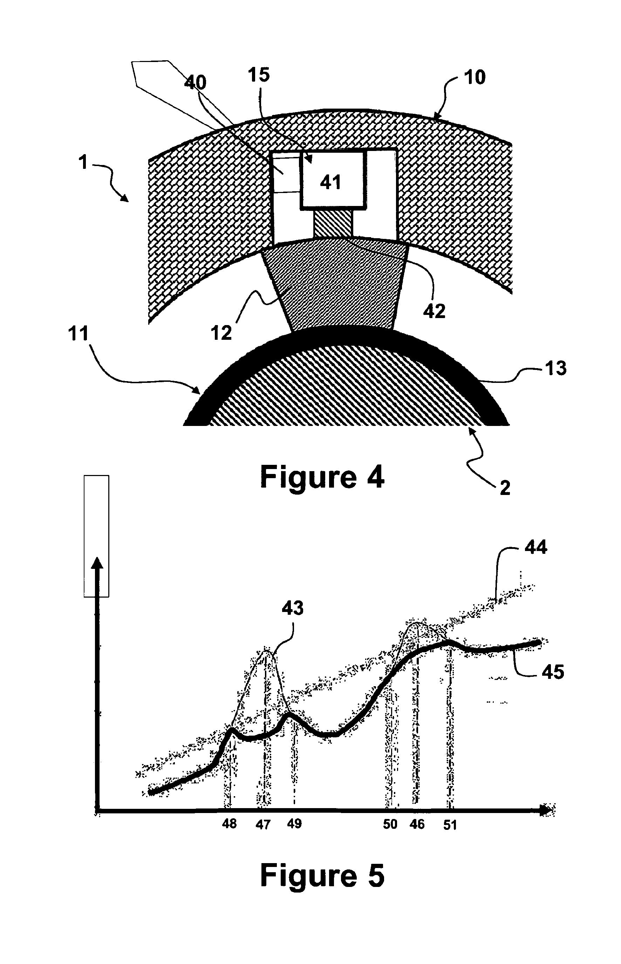

La figure 4 est une vue schématique d'une deuxième variante de réalisation du support-moteur 1 selon la présente invention. Plus spécifiquement, la figure 4 présente une variante de réalisation du dispositif adaptatif 15, transposable en tous points dans le système de découplage adaptatif 28 décrit précédemment.

De façon similaire à l'exemple de la figure 3, la figure 4 montre la deuxième variante de réalisation du dispositif adaptatif 15 dans laquelle la bague extérieure 10, le moyen de découplage 12, la bague intérieure 13 et le moteur électrique 2 sont ici représentés de manière schématique.

Selon la deuxième variante de réalisation, la bague extérieure 10 comprend un logement 40. Le logement 40 est réalisé, par exemple, dans l'épaisseur de la bague extérieure 10. Le logement 40 reçoit le dispositif adaptatif 15 du moyen de découplage 12.

Selon l'alternative de réalisation de la figure 4, le dispositif adaptatif 15 prend la forme d'un actionneur 41, avantageusement électrique ou pneumatique.

Contrairement aux variantes précédemment décrites dans lesquelles le dispositif adaptatif 15 du moyen de découplage 12 est à l'intérieur du moyen de découplage, selon le mode de réalisation de la figure 4, le dispositif adaptatif 15, par exemple l'actionneur 41, est installé à l'extérieur du moyen de découplage 12. Le dispositif adaptatif 15 est donc distinct et séparé du moyen de découplage 12.

L'actionneur 41 exerce une force sur le moyen de découplage 12, par exemple au moyen d'un bras 42 mis en mouvement par l'actionneur 41. Le bras 42 vient en appui contre au moins l'une des faces du moyen de découplage 12. Alternativement, le bras 42 peut par exemple être remplacé par une came.

Selon l'alternative de réalisation de la figure 4, la face du moyen de découplage 12 subissant la pression exercée par le dispositif adaptatif 15 est la deuxième face, c'est-à-dire la face opposée à la première face du moyen de découplage 12 en contact avec la bague intérieure 13.

Le dispositif adaptatif 15 modifie ainsi une caractéristique mécanique du moyen de découplage 12 par application d'une force générée par le dispositif adaptatif 15, par exemple l'actionneur 41, sur le moyen de découplage 12.

La figure 5 est un graphique comparatif du support-moteur 1 selon la présente invention et d'un support-moteur selon l'art antérieur. Plus particulièrement, la figure 5 illustre les effets de la présente invention sous la forme de courbes comparant les accélérations observées sur une bague extérieure d'un support moteur de l'art antérieur avec les accélérations observées sur la bague extérieure 10 du support moteur 1 selon la présente invention.

Sur la figure 5, en abscisse, est représentée la vitesse de rotation du moteur électrique 2, formant une image de la fréquence vibratoire perçue, et en ordonnée, est illustrée l'accélération mesurée sur la bague extérieure 10 du support-moteur 1.

Le graphique de la figure 5 comprend une courbe de référence 44, présentée à titre d'exemple sous la forme d'une droite sur la figure 5, illustrant une accélération observée sur une bague extérieure d'un support-moteur équipé d'un découplage transmettant intégralement et sans amplification la vibration émise par le déséquilibre, ou balourd, de l'ensemble constitué du moteur électrique 2 et de la roue de pulseur 6. En pratique, la courbe de référence 44 est, par exemple, obtenue par mesure de vibrations sur un support-moteur comportant des moyens de découplage dits 'durs'.

En effet, des moyens de découplage dits 'durs' évitent d'amplifier la vibration liée au balourd (ou harmonique H1). Mais, de tels moyens de découplage dits 'durs' sont pénalisants pour les harmoniques supérieures (par exemple harmonique H12, harmonique H24, ...), qui peuvent se traduire par des bruits à plus haute fréquence que le bruit lié au balourd. Dans de telles circonstances, un moyen de découplage dit 'souple' permet de filtrer les harmoniques supérieures.

Ainsi, si les accélérations observées sont en dessous de la courbe de référence 44, il est considéré que le découplage est satisfaisant d'un point de vue vibro-acoustique. Cela signifie qu'il n'y a pas d'amplification du balourd.

A l'inverse, si les accélérations observées sont au-dessus de la courbe de référence 44, il est considéré que le découplage amplifie le balourd, et que, par conséquent, il y a risque que ces vibrations soient perçues par l'utilisateur final, en particulier sous la forme de vibrations, notamment dans le volant ou de la planche de bord, ou encore sous la forme de bruits.

La courbe en trait fin 43 illustre le comportement vibratoire du support-moteur selon l'art antérieur. On constate la présence de pics vibratoires présents aux fréquences propres 46 et 47 du moyen de découplage 12.

Il existe donc un risque si le groupe moto-ventilateur tourne à un régime correspondant aux fréquences propres 46 et 47. En premier lieu, à de telles fréquences, la roue de pulseur 6 est susceptible d'heurter la volute du boîtier de l'installation de chauffage, ventilation et/ou climatisation. De plus, de larges déformations des moyens de découplage 12 sont susceptibles d'apparaître.

Par ailleurs, si le véhicule subit de fortes sollicitations externes (ou chocs) dues au roulage, la roue de pulseur 6 est susceptible d'être endommagée.

Bien entendu, le cumul des diverses contraintes (groupe moto-ventilateur tournant à un régime correspondant aux fréquences propres, fortes sollicitations externes, ...) justifie d'autant la présence du dispositif adaptatif 15 pour le moyen de découplage 12.

Il faut donc également noter que le dispositif adaptatif 15 modifie la rigidité des moyens de découplage 12, si des fortes sollicitations extérieures apparaissent, quelque soit la vitesse de rotation du moteur électrique 2.

La courbe en trait fort 45 montre le comportement vibratoire du support-moteur 1 selon la présente invention. On constate que les pics vibratoires aux fréquences propres 46 et 47 sont supprimés. De plus, pour toutes les vitesses de rotation du moteur électrique 2, les accélérations mesurées sur la bague extérieure 10 du support-moteur 1 sont en dessous de la courbe de référence 44. Ainsi, le moyen de découplage 12 comportant le dispositif adaptatif 15 est donc parfait sur toute la plage de fréquences de rotation du moteur électrique 2.

Selon la présente invention, le système de découplage adaptatif 28 détecte, à une fréquence 48, un franchissement du seuil déterminée par la courbe de référence 44 et active le dispositif adaptatif 15 pour, dans cet exemple, durcir le moyen de découplage 12. Autrement dit, la raideur du moyen de découplage 12 est augmentée au moyen du dispositif adaptatif 15, jusqu'à ce que le système de découplage adaptatif 28 détecte, à une fréquence 49, la fin d'activation du dispositif adaptatif 15. Ainsi, il est possible de contenir les accélérations entre les fréquences 48 et 49 en dessous de la courbe de référence 44. Le support-moteur 1 selon la présente invention garantit ainsi un bon découplage vibro-acoustique dans une majorité des situations d'usage du véhicule tout en augmentant la raideur du moyen de découplage 12 dans les situations de fortes sollicitations vibratoires, en provenance de l'intérieur ou de l'extérieur du support-moteur 1.

La figure 5 montre une situation similaire pour des fréquences de rotation du moteur électrique 2 plus élevée, comprises par exemple entre les fréquences 50 et 51.

De plus, les différents modes de fonctionnement décrits précédemment peuvent être pris séparément ou en combinaison afin de réaliser des alternatives de réalisation et diverses configurations du support-moteur 1 avec au moins un moyen de découplage 12 adaptatif selon la présente invention.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment.

## Revendications

1. Support-moteur (1) comprenant une bague extérieure (10) et un organe de réception (11) d'un moteur électrique (2), l'organe de réception (11) étant relié à la bague extérieure (10) par un moyen de découplage (12),
**caractérisé en ce que** le moyen de découplage (12) comprend un dispositif adaptatif (15) apte à modifier au moins une caractéristique mécanique du moyen de découplage (12).

2. Support-moteur (1) selon la revendication 1, dans lequel la caractéristique mécanique modifiée par le dispositif adaptatif (15) est une raideur du moyen de découplage (12).

3. Support-moteur (1) selon la revendication 1 ou 2, dans lequel la caractéristique mécanique modifiée par le dispositif adaptatif (15) est une dimension du moyen de découplage (12).

4. Support-moteur (1) selon l'une quelconque des revendications précédentes, dans lequel le dispositif adaptatif (15) modifie la caractéristique mécanique par passage d'un courant électrique au travers du moyen de découplage (12).

5. Support-moteur (1) selon l'une quelconques des revendications précédentes, dans lequel le dispositif adaptatif (15) modifie la caractéristique mécanique par changement de la température du moyen de découplage (12).

6. Support-moteur (1) selon la revendication 5, dans lequel le dispositif adaptatif (15) est un élément chauffant (25) en contact avec le moyen de découplage (12).

7. Support-moteur (1) selon la revendication 6, dans lequel l'élément chauffant (25) est intégré dans le moyen de découplage (12).

8. Support-moteur (1) selon l'une quelconques des revendications 4 à 7, dans lequel le dispositif adaptatif (15) est un matériau constitutif du moyen de découplage (12) présentant des propriétés électriques.

9. Support-moteur (1) selon l'une quelconque des revendications précédentes, dans lequel le dispositif adaptatif (15) modifie la caractéristique mécanique par application d'une force sur le moyen de découplage (12).

10. Support-moteur (1) selon la revendication 9, dans lequel le dispositif adaptatif (15) est un actionneur (41, 42) appliquant la force sur au moins une face du moyen de découplage (12).

11. Système de découplage adaptatif (28) comprenant un support-moteur (1) selon l'une quelconque des revendications précédentes, **caractérisé en ce qu'**il comprend un module de commande (29) agissant sur le dispositif adaptatif (15).

12. Système de découplage adaptatif (28) selon la revendication 11, dans lequel le module de commande (29) reçoit au moins un premier signal d'entrée (30) représentatif d'une vibration interne au support-moteur (1).

13. Système de découplage adaptatif (28) selon la revendication 11 ou 12, dans lequel le module de commande (29) reçoit au moins un deuxième signal d'entrée (31) représentatif d'une vibration externe au support-moteur (1).

14. Système de découplage adaptatif (28) selon l'une quelconque des revendications 11 à 13, dans lequel le module de commande (29) reçoit au moins un troisième signal d'entrée (32) représentatif d'une température d'air.
